# DEMANDE DE BREVET EUROPEEN

(11) **EP 3 763 636 A1**
(43) Date de publication de la demande: **13.01.2021**
(21) Numéro de dépôt: 20184396.8
(22) Date de dépôt: 07.07.2020
(51) Int. Cl.: B65D 81/34, H05B 6/12

(54) **CONDITIONNEMENT POUR LE CHAUFFAGE D'UN PRODUIT, FOUR À INDUCTION ÉLECTROMAGNÉTIQUE ET PROCÉDÉ DE CHAUFFAGE**

(30) Priorité: 09.07.2019 FR 1907701
(71) Demandeur: Société Générale D'Équipement De Restauration, 38530 Chapareillan (FR)
(72) Inventeur: RAFFAELE, Gerard, 38570 Goncelin (FR)
(74) Mandataire: Talbot, Alexandre

(57) **Abrégé**

Le conditionnement (10) pour produit alimentaire comportant une boite en matériau cartonné muni d'un fond (11) et d'un couvercle (13). Le couvercle (13) est monté à pivotement autour d'une charnière fixée au fond (11). Une feuille électriquement conductrice (14) est installée de manière à séparer le produit alimentaire et le fond (11). Le couvercle (13) est découpé au moyen d'une ligne de découpe s'étendant pour définir une zone centrale (16) et une zone périphérique (17) montées chacune à pivotement par rapport au fond (11). La zone centrale (16) s'inscrit à l'intérieur de la zone périphérique (17). La zone centrale (16) fait face à la feuille électriquement conductrice (14) et s'étend en partie dans une paroi latérale avant du couvercle (13) opposée à la paroi latérale supportant la charnière (12).

## Description

### Domaine technique

L'invention est relative à un four à induction électromagnétique, à un conditionnement pour le chauffage d'un produit coopérant avec un tel four et à un procédé de chauffage.

### Technique antérieure

Il est connu d'utiliser un produit installé dans un conditionnement qui doit coopérer avec un four à induction électromagnétique. Le produit à chauffer ou réchauffer est installé dans le conditionnement. Le conditionnement comporte un emballage cartonné muni d'un fond et d'un couvercle monté mobile à pivotement pour fermer le conditionnement. L'emballage cartonné se présente sous la forme d'un parallélépipède.

Le conditionnement comporte également deux barquettes en aluminium pour stocker le produit à chauffer. Le produit est disposé entre les deux barquettes en aluminium. Les deux barquettes en aluminium se rejoignent pour former un volume fermé qui contient le produit.

Lors de l'introduction du conditionnement dans le four, il est important de respecter la position relative du conditionnement par rapport aux deux inducteurs pour obtenir un chauffage bien réparti. Pour faciliter l'utilisation de ce produit, le conditionnement est introduit fermé dans la zone de chauffage ce qui évite toute opération de manutention des barquettes en aluminium hors de l'emballage cartonné.

Il ressort que lors du chauffage du produit, l'apport de chaleur ne se répartit pas uniformément dans le conditionnement de sorte que le capot brunit au contact de la barquette supérieure en aluminium. Le brunissement du couvercle renvoie une image négative sur l'étape de chauffage et sur le produit qui est contenu dans le conditionnement. Lorsque le dispositif de chauffage n'est pas un inducteur coopérant la barquette supérieure, le couvercle en carton agit comme un film thermiquement isolant ce qui nécessite d'appliquer une quantité d'énergie plus importante pour chauffer le produit.

### Objet de l'invention

Un objet de l'invention consiste à réaliser un conditionnement pour produit alimentaire destiné à coopérer avec un four à induction. Le conditionnement permet une meilleure gestion du chauffage du produit, tout en restant simple d'utilisation et en assurant une bonne tenue mécanique.

Le conditionnement pour produit alimentaire comporte :
- une boite en matériau cartonné muni d'un fond et d'un couvercle, le couvercle étant monté à pivotement autour d'une charnière fixée au fond entre une position fermée et une position ouverte, le couvercle possédant une paroi principale supérieure en vis-à-vis d'une paroi principale inférieure du fond dans la position fermée et des parois latérales,
- une feuille électriquement conductrice installée de manière à séparer le produit alimentaire et le fond.

Le conditionnement est remarquable en ce que le couvercle est découpé pour définir une zone centrale et une zone périphérique montées chacune à pivotement indépendant par rapport au fond, la zone périphérique étant montée à pivotement autour de la charnière, la zone centrale étant montée à pivotement par rapport à la zone périphérique et s'inscrivant à l'intérieur de la zone périphérique, la zone centrale faisant face à la feuille électriquement conductrice et s'étendant en partie dans une paroi latérale avant du couvercle opposée à la paroi latérale supportant la charnière de la zone périphérique ou dans une paroi latérale arrière du couvercle supportant la charnière de la zone périphérique, la zone centrale représentant au moins 50% de la surface de la paroi principale supérieure du couvercle.

Dans un développement, la zone centrale et la zone périphérique sont montées à pivotement autour d'une même charnière.

L'invention a également pour objet un four à induction électromagnétique, permettant d'obtenir un chauffage optimum et rapide du repas à chauffer tout en évitant de dégrader l'aspect du conditionnement et/ou en réduisant les pertes énergétiques. Le four est un four à induction pour chauffer un produit placé dans un conditionnement muni d'un fond associé à un couvercle mobile en pivotement par rapport au fond. Le four à induction électromagnétique comporte :
- un carter définissant une fente d'introduction du conditionnement vers une zone de chauffage,
- un inducteur inférieur et un dispositif de chauffage disposés dans le carter et espacés l'un de l'autre pour définir la zone de chauffage.

Le four à induction est remarquable en ce qu'il comporte des moyens de détection configurés pour détecter la présence ou l'absence du couvercle du conditionnement, les moyens de détection étant configurés pour empêcher l'alimentation électrique de l'inducteur et du dispositif de chauffage lorsque les moyens de détection détectent la présence du couvercle du conditionnement dans la zone de chauffage et pour autoriser l'alimentation de l'inducteur et du dispositif de chauffage lorsque les moyens de détection détectent l'absence du couvercle dans la zone de chauffage, les moyens de détection comportant un pion mobile, un circuit de commande suivant le déplacement du pion mobile pour en déduire l'absence ou la présence du couvercle dans la zone de chauffage.

Dans un développement, le pion mobile se déplace dans la zone de chauffage selon une direction qui passe par l'inducteur et le dispositif de chauffage.

Avantageusement, le carter définit un guide configuré pour guider le conditionnement de la fente vers la zone de chauffage selon une première direction, le pion mobile se déplaçant dans la zone de chauffage selon la première direction, le pion mobile étant associé à un ressort poussant le pion mobile en direction de la fente de sorte que l'introduction du conditionnement appuie sur le pion mobile.

Dans une alternative de réalisation, le four à induction comprend :
- un carter définissant une fente d'introduction du conditionnement vers une zone de chauffage,
- un inducteur inférieur et un dispositif de chauffage espacés l'un de l'autre pour définir la zone de chauffage.
Le four à induction est remarquable en ce qu'il comporte un détrompeur formant une partie de la fente d'introduction, le détrompeur s'étendant depuis la face supérieure de la fente vers la face inférieure de la fente pour empêcher l'introduction du conditionnement lorsque le couvercle est dans une position fermant le conditionnement.
L'invention a également pour objet un procédé de chauffage d'un produit dans un conditionnement en matériau cartonné qui est plus efficace énergétiquement et/ou qui réduit la détérioration du matériau cartonné.

Le procédé est remarquable en ce qu'il comporte les étapes suivantes :
- fournir un conditionnement selon l'un des modes de réalisation précédents dans la position fermée
- fournir un four selon l'un des modes de réalisation précédents,
- déplacer la zone centrale de la position fermée à la position de chauffage, la zone périphérique étant dans la position fermée,
- introduire le fond et le produit dans la zone de chauffage du four à induction en passant par la fente, la zone centrale étant hors de la zone de chauffage,
- chauffer le produit.

### Description sommaire des dessins

D'autres avantages et caractéristiques ressortiront plus clairement de la description qui va suivre de modes particuliers de réalisation et de mise en œuvre de l'invention donnés à titre d'exemples non limitatifs et représentés aux dessins annexés, dans lesquels :
la figure 1 illustre, de manière schématique, en vue de face, un four à induction muni d'un détrompeur sur la fente d'introduction du conditionnement ;
la figure 2 représente de manière schématique, en vue de face, un four à induction muni d'un pion mobile verticalement dans la zone de chauffage ;
la figure 3 représente de manière schématique, selon une coupe longitudinale, un four à induction muni d'un pion mobile longitudinalement dans la zone de chauffage ;

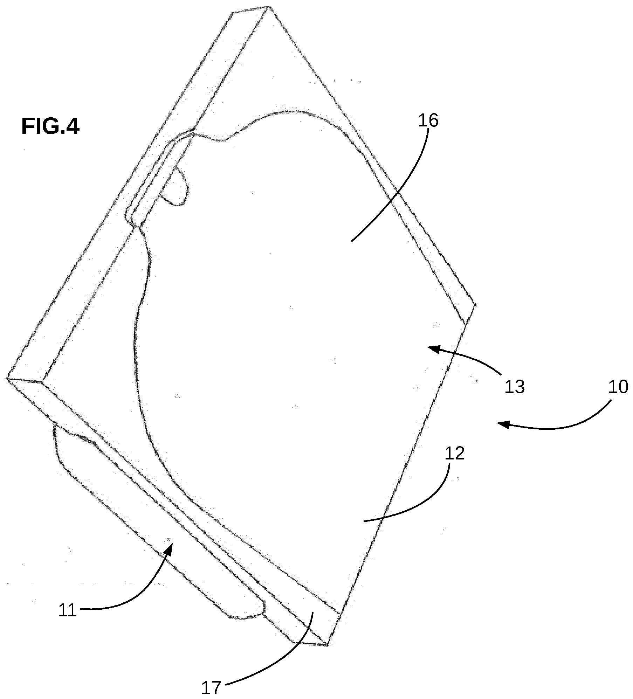

la figure 4 représente de manière schématique un conditionnement en position fermée et dépourvu des barquettes métalliques ;

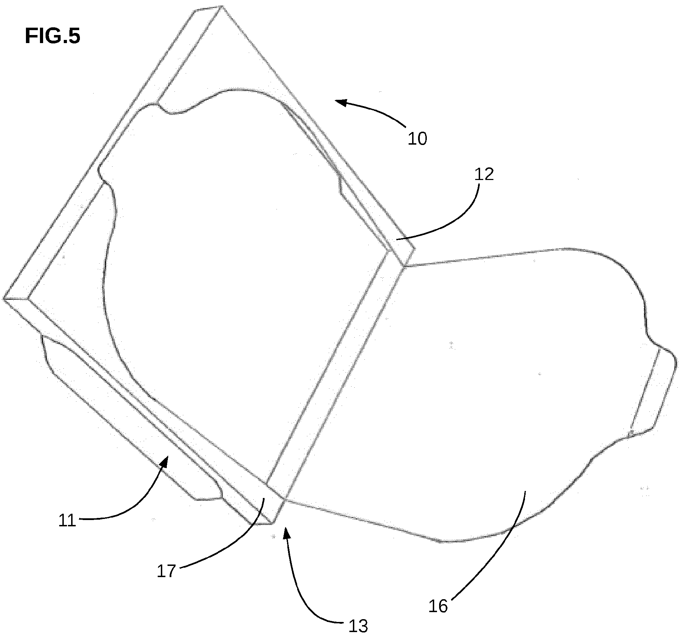

la figure 5 représente de manière schématique un conditionnement en position ouverte et dépourvu des barquettes métalliques.

### Description des modes de réalisation

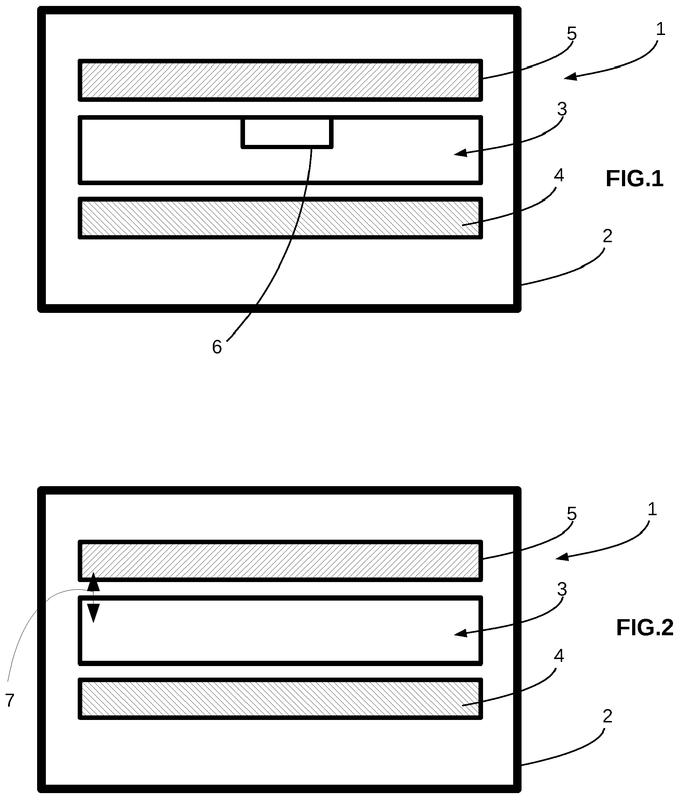

En référence aux figures 1 à 3, un four à induction 1 électromagnétique comporte un carter 2 qui définit une fente 3 d'introduction d'un conditionnement 10 vers une zone de chauffage. Un inducteur électromagnétique inférieur 4 et un dispositif de chauffage supérieur 5 sont disposés dans le carter 2. L'inducteur électromagnétique inférieur 4 et le dispositif de chauffage supérieur 5 sont espacés l'un de l'autre d'une distance autorisant l'introduction d'un conditionnement qui reçoit un produit à chauffer ou à réchauffer. Le produit est un produit alimentaire. L'inducteur 4 et le dispositif de chauffage 5 sont en vis-à-vis et sont espacés l'un de l'autre pour définir la zone de chauffage qui reçoit le conditionnement 10 et donc le produit à chauffer. L'inducteur 4 et le dispositif de chauffage 5 sont en vis-à-vis selon une direction verticale.

Le conditionnement 10 se présente sous la forme d'une boite et est également appelé boite. La boite forme un parallélépipède.

Le dispositif de chauffage supérieur 5 peut être un inducteur électromagnétique ou un dispositif de chauffage radiant possédant une résistance et/ou un dispositif de chauffage infrarouge. L'inducteur 4 est avantageusement un inducteur horizontal et il en est avantageusement de même pour le dispositif de chauffage 5.

Le four 1 peut faire partie d'un appareil de distribution automatique de produits disposés dans un conditionnement 10, notamment des pizzas ou des tartes,

Le four est configuré de manière à ce que la fente 3 d'introduction du conditionnement 10 assure l'introduction horizontale du conditionnement 10 entre l'inducteur 4 et le dispositif de chauffage 5. L'inducteur 4 et le dispositif de chauffage 5 sont avantageusement séparés par des profilés de maintien afin de définir l'espacement destiné à recevoir le conditionnement 10. Le four comporte un guide qui guide le conditionnement depuis la fente 3 vers la zone de chauffage. Le guide définit une première direction de déplacement du conditionnement 10.

L'inducteur 4 comporte un bobinage plat porté par une plaque support en matériau isolant. L'inducteur 4 est connecté électriquement à un générateur d'alimentation (non représenté), par exemple du type décrit dans le document FR 2818499, pour générer lors de l'excitation, une induction électromagnétique dans la zone de chauffage. Le dispositif de chauffage 5 est également associé à un générateur d'alimentation qui procure de l'énergie électrique au dispositif de chauffage 5. Le générateur d'alimentation du dispositif de chauffage peut être identique ou différent de celui de l'inducteur 4.

Le conditionnement 10 comprend une boîte en matériau cartonné dans laquelle on introduit la pizza ou tout autre produit à réchauffer. La boite présente la forme d'un parallélépipède. La boîte comporte un fond 11 articulé par une ligne de pliage 12 à un couvercle 13 rabattable. La ligne de pliage 12 forme une charnière entre le fond 11 et le couvercle 13. Une feuille inférieure 14 dans une matière conductrice de l'électricité, par exemple une feuille métallique, est installée dans la boite de manière à séparer le produit à réchauffer et le fond 11. La feuille inférieure est présentée par la suite comme la feuille métallique inférieure 14. L'inducteur 4 est alimenté en courant électrique ce qui permet de chauffer la feuille métallique. L'apport de calorie apporté à la feuille métallique inférieure 14 permet de chauffer le produit. La feuille métallique inférieure 14 présente avantageusement la forme d'une barquette avec des rebords. La feuille métallique inférieure 14 est montée amovible par rapport à la boite.

La feuille inférieure 14 est par exemple une feuille d'aluminium. Le produit est par exemple une pizza contenue dans un plat en aluminium, l'ensemble étant posé sur le fond 11 à l'intérieur de la boîte.

Pour faciliter la manutention du produit, le produit est conservé le plus longtemps possible dans la boite et sur le fond 11. Lors du chauffage du produit, le couvercle 13 n'est pas en contact avec le produit de manière à protéger la surface supérieure du produit. Il en est avantageusement de même durant sa manutention. Il ressort également qu'il est intéressant d'avoir le chauffage du produit dans la boite 1 car cela facilite la manutention du produit chaud. Après le chauffage, la feuille métallique inférieure 14 est chaude, il est donc préférable de porter le produit au moyen de la boite et notamment du fond 11 en matériau cartonné. Il est également intéressant de pouvoir utiliser le couvercle 13 afin de refermer la boite 1 et maintenir le produit au chaud plus longtemps.

Pour éviter la détérioration du couvercle 13, le chauffage du produit s'effectue avec le couvercle 13 en position ouverte ou en position de chauffage. Il est particulièrement avantageux de réaliser l'insertion du conditionnement 10 avec le couvercle 13 en position de chauffage et d'avoir une fente 3 et une zone de chauffage qui interdisent le couvercle 13 en position ouverte dans la zone de chauffage. La distance entre l'inducteur 4 et le dispositif de chauffage 5 est inférieure à la longueur de la paroi supérieure de la boite 1, c'est-à-dire la distance entre la charnière et la face avant opposée de la boite 1. Lors du chauffage du produit, le couvercle 13 est hors de la zone de chauffage, de préférence contre la face avant du carter 2 qui définit la fente 3.

Dans une configuration particulière, le conditionnement comporte en plus de la feuille métallique inférieure 14, une feuille métallique supérieure 15. La feuille métallique inférieure et la feuille métallique supérieure définissent ensemble un volume de réception du produit. La feuille métallique inférieure 14 est chauffée au moyen de l'inducteur 4. La feuille métallique supérieure 15 peut être chauffée par le dispositif de chauffage 5 qui est de type inductif. La feuille métallique supérieure 15 n'est pas fixée à la boite.

Dans cette configuration, les calories apportées à la feuille métallique supérieure 15 ne sont pas transmises au couvercle 13 et servent uniquement à chauffer le volume délimité par les deux feuilles métalliques et qui comporte le produit à réchauffer. Il ressort également que le couvercle 13 n'est pas agencé pour bloquer une partie des calories émises par le dispositif de chauffage 5 en direction de la face supérieure du produit à chauffer.

Pour éviter que l'opération de chauffage du produit soit effectuée avec le couvercle 13 en position fermée, c'est-à-dire avec le couvercle 13 qui ferme la boite 1, le four peut être muni d'un détrompeur 6 qui interdit l'insertion d'une boite fermée et/ou le four est muni de moyens de détection configurés pour détecter la présence ou l'absence du couvercle dans la zone de chauffage. La figure 1 illustre un four muni d'un détrompeur 6 sur la fente 3. De manière avantageuse, le détrompeur 6 est distinct des moyens de chauffage pour faciliter le nettoyage du détrompeur 6. Il est également avantageux d'avoir un détrompeur 6 qui est électriquement dissocié des moyens de chauffage. De manière préférentielle, le détrompeur 6 est monté en amont des moyens de chauffage de manière à empêcher que la boite n'entre dans le four et vienne en contact des moyens de chauffage lorsque la boite est en position fermée.

L'utilisation d'un détrompeur 6 est particulièrement avantageuse en coopération avec une boite 1 qui comporte une encoche en face avant agencée pour autoriser le passage du détrompeur 6. La face avant de la boite est la paroi opposée à la paroi latérale qui comporte la charnière. Dans l'art antérieur, la fente 3 d'introduction est de forme rectangulaire et les dimensions de la fente sont plus importantes que celle de la boite en position fermée pour assurer une installation aisée des produits dans la zone de chauffage. Le détrompeur 6 réduit ponctuellement la hauteur de la fente 3 pour éviter l'insertion d'une boite fermée. L'encoche représente un amincissement de la hauteur de la paroi latérale avant de la boite ce qui est représentatif d'une boite avec un couvercle en position ouverte ou en position de chauffage. Dans un mode de réalisation avantageux, le détrompeur 6 s'étend jusqu'à la hauteur ou sous la hauteur du dispositif de chauffage supérieur 5.

Dans un mode de réalisation particulier alternatif ou combinable au précédent, le four comporte des moyens de détection configurés pour détecter la présence ou l'absence du couvercle 13 dans la zone de chauffage. Lorsque les moyens de détection détectent la présence du couvercle 13 dans la zone de chauffage, ils bloquent l'alimentation de l'inducteur 4 et l'alimentation du dispositif de chauffage 5. La détection du couvercle 13 empêche l'activation du dispositif de chauffage 5 de manière à éviter que la feuille métallique supérieure 15 génère des calories et donc éviter la détérioration du couvercle 13 lorsque le dispositif de chauffage est un inducteur. Il en est de même lorsque le dispositif de chauffage 6 est radiant ou à rayonnement infrarouge car le couvercle 13 bloque le rayonnement depuis le dispositif de chauffage 5 jusqu'au produit. Le chauffage est plus efficace

Lorsque les moyens de détection détectent l'absence du couvercle 13 dans la zone de chauffage, ils autorisent l'alimentation de l'inducteur 4 et l'alimentation du dispositif de chauffage 5. Le chauffage du produit peut être réalisé.

Les moyens de détection peuvent se présenter sous différentes formes afin de détecter l'absence ou la présence du couvercle 13 rabattu sur le fond de la boite 1, c'est-à-dire en position fermée. Il est avantageux d'utiliser un pion 7 monté mobile dans le carter 2, dans ou à proximité de la zone de chauffage, le déplacement du pion 7 est lié à la présence ou à l'absence du couvercle 13.

Dans un mode de réalisation particulier, le four est muni d'un pion 7 monté mobile et qui est configuré pour détecter une différence de forme dans le conditionnement selon que le couvercle 13 est dans la position fermée, dans la position ouverte ou dans la position de chauffage. Le pion 7 peut détecter la présence de l'encoche ce qui est représentatif du couvercle en position ouverte ou en position de chauffage.

Comme illustré à la figure 2, le pion 7 peut être monté mobile avec un déplacement sensiblement vertical ou une composante verticale de manière à venir en contact avec le couvercle avant de venir en contact du fond. Le mouvement du pion peut être une translation ou une rotation afin de venir en contact avec la face inférieure du fond 11. Par exemple, le pion 7 se déplace verticalement et la valeur d'extension du pion permet de détecter la présence ou l'absence du couvercle 13 selon un axe qui relie l'inducteur 3 et le dispositif de chauffage 4. Ce mode de réalisation présente néanmoins l'inconvénient d'avoir un pion 7 qui peut venir en contact avec le produit ou avec la feuille métallique supérieure lors de son déplacement vertical vers le fond du conditionnement. Cela nécessite également d'avoir un dispositif de déplacement du pion 7. Pour éviter le contact avec le produit, il est possible d'installer le pion 7 à un coin de la boite, mais cela impose d'utiliser des boites qui ont sensiblement toujours les mêmes dimensions, d'avoir un produit qui ne se déplace pas dans la boite et de maitriser l'introduction de la boite dans la zone de chauffage.

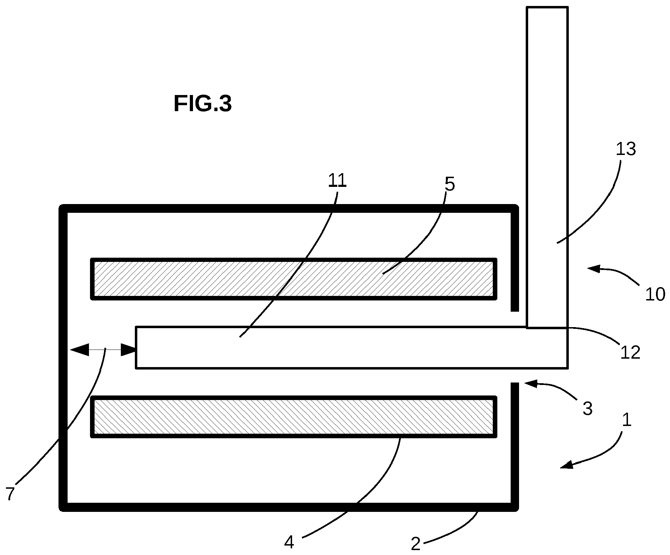

Dans un autre mode de réalisation illustré à la figure 3, le pion 7 est monté mobile en translation selon un axe horizontal ou sensiblement horizontal. Lorsque l'utilisateur introduit le conditionnement dans la zone de chauffage, le conditionnement pousse ou non sur le pion 7 ce qui permet de détecter l'enfoncement du conditionnement dans la zone de chauffage avec un couvercle en position ouverte ou en position fermée ou en position de chauffage. Là encore, cela nécessite d'avoir un conditionnement dont la profondeur et le positionnement dans la zone de chauffage sont parfaitement maitrisés pour détecter la non-présence du couvercle. La translation peut être remplacée par une rotation.

Il est avantageux d'avoir un conditionnement dont les parois latérales du fond 11 définissent un motif différent du motif défini par les parois latérales du couvercle 13. Le pion 7 est disposé face à une différence entre les motifs des deux parois latérales, par exemple l'encoche indiquée plus haut. La différence de motif est détectée par une différence d'enfoncement du pion 7. De manière avantageuse, lorsque le couvercle 13 est en position fermée, le pion 7 entre en contact du couvercle 13 et est enfoncé. Lorsque le couvercle 13 est en position ouverte ou de chauffage, le pion 7 fait face à une zone vide et n'est pas enfoncé. L'absence d'enfoncement ou l'enfoncement permet de discriminer un couvercle en position ouverte ou en position de chauffage et un couvercle en fermée. Le pion 7 est associé à un ressort connecté d'une part au pion 7 et d'autre part au carter 2. Le ressort est configuré pour obtenir l'extension du pion 7 et s'opposer à l'enfoncement du pion 7 lors de l'introduction du conditionnement dans la zone de chauffage. Le ressort pousse le pion mobile 7 vers la fente 3.

Dans une alternative de réalisation, le pion 7 est enfoncé sur une distance différente entre les positions ouverte ou de chauffage et la position fermée. Ce mode de réalisation est plus difficile à mettre en œuvre car il dépend de l'enfoncement du conditionnement à l'intérieur du carter 2 ce qui peut varier selon les utilisateurs et selon les dimensions du conditionnement 10.

L'utilisation d'un détrompeur 6 est particulièrement avantageuse car le détrompeur 6 est monté fixe et définit la forme de la fente 3 de sorte que l'utilisateur comprend immédiatement que le conditionnement 10 en position fermée ne pourra pas rentrer dans la zone de chauffage.

Dans un mode de réalisation particulier, afin d'assurer une meilleure tenue mécanique de la boite 10 lors de son insertion dans la zone de chauffage et lors de son extraction, il est avantageux de définir une position de chauffage au lieu de la position ouverte de la boite 10. Il est intéressant de découper la face supérieure de la boite 10 pour définir deux portions du couvercle qui différencient la position ouverte et la position de chauffage. Il est avantageux que le découpage de la face supérieure de la boite 10 s'étende jusqu'à une partie de la face avant.

Le fond 11 possède une paroi principale inférieure destinée à être recouverte par la feuille métallique 14 et destinée à supporter le produit à chauffer. Le fond 11 possède également des parois latérales reliées entre elles et à la paroi principale inférieure pour assurer une tenue mécanique suffisante. Cependant, la tenue mécanique procurée par le fond peut être insuffisante lorsque la boite 10 est en position ouverte ce qui oblige l'utilisateur à porter la boite 10 par le dessous qui est chaud. Il est donc avantageux de prévoir une configuration dans laquelle la boite présente une tenue mécanique améliorée tout en autorisant le chauffage de la boite 10.

Le couvercle 13 possède une paroi principale supérieure, des parois latérales reliées entre elles et à la paroi principale supérieure pour assurer une tenue mécanique suffisante. Dans la position fermée, les parois latérales du couvercle 13 et du fond viennent en contact et limite la déformation de la boite 1 due au poids du produit.

Le fond définit une zone de réception délimitée par les parois latérales. Selon les configurations, dans la position fermée, le couvercle 13 peut s'installer à l'intérieur de la zone de réception ou à l'extérieur de la zone de réception.

Comme illustré sur les figures, le couvercle 13 présente un découpage de la paroi principale supérieure qui s'étend jusqu'à la face avant du conditionnement 1.

Le découpage permet de définir une zone centrale 16 et une zone périphérique 17 qui sont toutes les deux montées à pivotement par exemple au moyen de la charnière. La zone centrale 16 et la zone périphérique 17 peuvent pivoter indépendamment l'une de l'autre les charnières peuvent être identiques ou différentes. La zone centrale 16 est inscrite à l'intérieur de la zone périphérique 17. La zone périphérique 17 comprend les trois parois latérales en plus de la paroi formant la charnière. La zone périphérique 17 possède une continuité mécanique au moyen des différentes parois latérales ce qui améliore la tenue mécanique de la boite. La zone centrale 16 est séparée de la zone périphérique par une ligne de découpe.

La paroi avant du fond 11 est découpée afin de coopérer avec le détrompeur 6 ou pour faciliter la détection du couvercle 13 en position fermée. La zone découpée de la partie avant du couvercle 13 fait face à la zone découpée (c'est-à-dire supprimée) du fond 11.

Dans la position ouverte, la zone centrale 16 et la zone périphérique 17 du couvercle 13 ont pivoté par rapport au fond afin de laisser libre l'accès à la partie intérieure de la boite 1. Cette position est utilisée pour y insérer le produit à réchauffer. Préférentiellement, le produit à réchauffer est installé entre deux films métalliques et les deux films métalliques sont manipulés afin de ne pas manipuler directement le produit.

Le conditionnement est ensuite refermé. Dans la position fermée, la zone centrale 16 et la zone périphérique 17 du couvercle 13 ont pivoté par rapport au fond 11 autour de la charnière afin de refermer la boite 1. Le couvercle 13 vient en contact du fond 11. Le couvercle 13 prend appui sur le fond 11 pour protéger le produit lors de la manutention de la boite. La zone centrale 16 fait face au produit selon une direction perpendiculaire à la face principale inférieure.

Dans la position de chauffage, la partie centrale 16 pivote par rapport au fond 11 et à la partie périphérique 17 de manière à ne plus recouvrir le produit à chauffer. Par exemple, la partie centrale 16 est disposée perpendiculairement à la paroi principale inférieure. Dans la position de chauffage, la partie périphérique 17 est dans une position identique à la position fermée de sorte que les multiples parois latérales du couvercle 13 viennent en contact des parois latérales du fond 11 ou de la paroi principale inférieure ce qui assure une bonne tenue mécanique de la boite 1. La portion de la paroi principale supérieure de la partie périphérique 17 intervient également dans la bonne tenue mécanique de la boite 1 dans la position fermée et dans la position de chauffage.

La partie centrale 16 qui était initialement au dessus du produit à chauffer a pivoté de sorte que la partie centrale 16 ne se trouve pas entre le produit à chauffer et le dispositif de chauffage 5. La partie centrale n'est pas chauffée par la feuille métallique supérieure et/ou n'intervient pas comme un isolant thermique entre le dispositif de chauffage 5 et le produit à chauffer.

Le découpage du couvercle 13 pour définir la partie centrale 16 s'étend avantageusement sur une partie seulement de la hauteur de la paroi latérale afin d'assurer la tenue mécanique du couvercle 13, de préférence moins de 50% de la hauteur de la face avant. Il est avantageux de prévoir que le découpage de la face avant du couvercle 13 s'étend sur une partie de la largeur de la face avant, préférentiellement sur moins de 50% de la largeur de la face avant pour assurer la tenue mécanique du couvercle 13. Préférentiellement, l'ouverture de la face avant est centrée vis-à-vis de la largeur de la face avant.

Dans le mode de réalisation illustré, le découpage est réalisé afin de définir une seule zone découpée dans la face avant du couvercle 13, mais un nombre plus important de découpes peut être réalisé.

Le découpage du couvercle 13 en une zone centrale 16 et une zone périphérique 17 permet de former une position de chauffage qui présente simultanément la tenue mécanique de la position fermée tout en autorisant le chauffage du produit. Lors de l'introduction du conditionnement dans la zone de chauffage puis son extraction, la boite présente une tenue mécanique accrue ce qui évite de tenir la boite sous le produit. L'absence de la zone centrale lors de la phase de chauffage évite la détérioration du couvercle juste au-dessus du produit ou la présence d'un isolant thermique entre le dispositif de chauffage et le produit.

Préférentiellement, la zone centrale 16 représente au moins 50% de la surface de la face supérieure du couvercle encore plus préférentiellement au moins 75% de la surface de la face supérieure du couvercle. De manière avantageuse, la zone centrale s'étend sur au moins 50% ou au moins 75% de la largeur de la paroi principale supérieure, la largeur étant mesurée selon l'axe de pivotement de la zone périphérique. De manière avantageuse, la zone centrale s'étend sur au moins 50% ou au moins 75% de la longueur de la paroi principale supérieure, la longueur étant mesurée selon l'axe de pivotement de la zone périphérique.

Dans le mode de réalisation illustré la zone centrale 16 et la zone périphérique 17 possède la même charnière et pivote autour du même axe de rotation, ici la face arrière de la boite. Dans une alternative de réalisation, la zone centrale 16 et la zone périphérique 16 sont montées à pivotement autour de deux charnières différentes. Par exemple, la charnière de la zone périphérique est montée sur une paroi latérale alors que la charnière de la zone centrale est montée sur la paroi principale supérieure à proximité de la charnière de la zone périphérique 17. Dans encore un autre mode de réalisation, la charnière de la zone périphérique est montée sur une paroi latérale alors que la charnière de la zone centrale est montée sur la paroi latérale opposée ou sur la paroi principale supérieure à proximité de la paroi latérale opposée.

Cette configuration de conditionnement permet de réaliser le produit puis de le placer sur la feuille métallique inférieure 14. La feuille métallique inférieure 14 est ensuite manipulée pour être installée sur le fond 11. La boite est fermée pour sa manutention.

Pour chauffer le produit, on fournit un conditionnement avantageusement tel que celui décrit plus haut. Le couvercle est en position fermée afin de protéger le produit au moyen de la paroi principale supérieure du couvercle.

La zone centrale 16 est déplacée afin de la disposer dans la position de chauffage. Le conditionnement est introduit dans la zone de chauffage entre l'inducteur et le dispositif de chauffage. Le conditionnement est introduit dans la zone de chauffage en le faisant passer à travers la fente. La zone centrale 16 est disposée dans la position de chauffage de sorte que la zone centrale 16 ne s'oppose pas à l'insertion du conditionnement 10 en buttant contre le détrompeur 6 et/ou que le pion mobile 7 détecte l'absence du couvercle 13 dans la zone de chauffage.

Le produit est chauffé au moyen de l'inducteur 4 et du dispositif de chauffage 5. Le produit est ensuite retiré de la zone de chauffage.

Selon les modes de réalisation, le conditionnement peut être pourvu ou dépourvu du deuxième film métallique.

## Revendications

1. Conditionnement (10) pour produit alimentaire comportant :
- une boite en matériau cartonné muni d'un fond (11) et d'un couvercle (13), le couvercle (13) étant monté à pivotement autour d'une charnière (12) fixée au fond (11) entre une position fermée et une position ouverte, le couvercle (13) possédant une paroi principale supérieure en vis-à-vis d'une paroi principale inférieure du fond dans la position fermée et des parois latérales,
- une feuille électriquement conductrice (14) installée de manière à séparer le produit alimentaire et le fond (11),
conditionnement (10) **caractérisé en ce que** le couvercle (13) est découpé pour définir une zone centrale (16) et une zone périphérique (17) montées chacune à pivotement indépendant par rapport au fond (11), la zone périphérique (17) étant montée à pivotement autour de la charnière (12), la zone centrale (16) étant montée à pivotement par rapport à la zone périphérique (17) et s'inscrivant à l'intérieur de la zone périphérique (17), la zone centrale (16) faisant face à la feuille électriquement conductrice (14) et s'étendant en partie dans une paroi latérale avant du couvercle (13) opposée à la paroi latérale supportant la charnière (12) de la zone périphérique (17) ou dans une paroi latérale arrière du couvercle (13) supportant la charnière (12) de la zone périphérique (17), la zone centrale (16) représentant au moins 50% de la surface de la paroi principale supérieure du couvercle (13).

2. Conditionnement (1) selon la revendication précédente, dans lequel la zone centrale (16) et la zone périphérique (17) sont montées à pivotement autour d'une même charnière (12).

3. Four à induction (1) pour chauffer un produit placé dans un conditionnement (10) muni d'un fond (11) associé à un couvercle (13) mobile en pivotement par rapport au fond (11), le four à induction (1) comprenant :
- un carter (2) définissant une fente (3) d'introduction du conditionnement (10) vers une zone de chauffage,
- un inducteur inférieur (4) et un dispositif de chauffage (5) disposés dans le carter (2) et espacés l'un de l'autre pour définir la zone de chauffage,
four à induction (1) **caractérisé en ce qu'**il comporte des moyens de détection configurés pour détecter la présence ou l'absence du couvercle (13) du conditionnement (10), les moyens de détection étant configurés pour empêcher l'alimentation électrique de l'inducteur inférieur (4) et du dispositif de chauffage (5) lorsque les moyens de détection détectent la présence du couvercle (13) du conditionnement (10) dans la zone de chauffage et pour autoriser l'alimentation de l'inducteur inférieur (4) et du dispositif de chauffage (5) lorsque les moyens de détection détectent l'absence du couvercle (13) dans la zone de chauffage, les moyens de détection comportant un pion mobile (7), un circuit de commande suivant le déplacement du pion mobile (7) pour en déduire l'absence ou la présence du couvercle (13) dans la zone de chauffage.

4. Four à induction (1) selon la revendication précédente dans lequel le pion mobile (7) se déplace dans la zone de chauffage selon une direction qui passe par l'inducteur inférieur (4) et le dispositif de chauffage (5).

5. Four à induction (1) selon la revendication 3 dans lequel le carter (2) définit un guide configuré pour guider le conditionnement de la fente vers la zone de chauffage selon une première direction, le pion mobile (7) se déplaçant dans la zone de chauffage selon la première direction, le pion mobile (7) étant associé à un ressort poussant le pion mobile (7) en direction de la fente (3) de sorte que l'introduction du conditionnement appuie sur le pion mobile

6. Four à induction (1) pour chauffer un produit placé dans un conditionnement (10) muni d'un fond (11) associé à un couvercle (13) mobile en pivotement par rapport au fond (11), le four à induction (1) comprenant :
- un carter (2) définissant une fente (3) d'introduction du conditionnement (10) vers une zone de chauffage,
- un inducteur inférieur (4) et un dispositif de chauffage (5) espacés l'un de l'autre pour définir la zone de chauffage,
four à induction (1) **caractérisé en ce qu'**il comporte un détrompeur (6) formant une partie de la fente (3) d'introduction, le détrompeur (6) s'étendant depuis la face supérieure de la fente (3) vers la face inférieure de la fente (3) pour empêcher l'introduction du conditionnement (10) lorsque le couvercle est dans une position fermant le conditionnement (10), le détrompeur étant monté en amont du dispositif de chauffage (5) et électriquement isolé du dispositif de chauffage (5).

7. Procédé de chauffage d'un produit comportant les étapes suivantes :
- fournir un conditionnement selon l'une des revendications 1 et 2 dans la position fermée
- fournir un four selon l'une des revendications 3 à 6,
- déplacer la zone centrale (16) de la position fermée à la position de chauffage, la zone périphérique étant dans la position fermée,
- introduire le fond (11) et le produit dans la zone de chauffage du four à induction en passant par la fente, la zone centrale étant hors de la zone de chauffage,
- chauffer le produit.
